# EUROPEAN PATENT APPLICATION

(11) **EP 1 855 105 A1**
(43) Date of publication of application: **14.11.2007**
(21) Application number: 07008568.3
(22) Date of filing: 26.04.2007
(51) Int. Cl.: G01N 27/12

(54) **Gas sensor, and internal combustion engine and transportation apparatus incorporating the same**

(30) Priority: 12.05.2006 JP 2006133911
(71) Applicant: Yamaha Hatsudoki Kabushiki Kaisha, Iwata-shi, Shizuoka 438-8501 (JP)
(72) Inventor: Oohori, Noriko, Iwata-shi Shizuoka-ken 438-8501 (JP)
(74) Representative: Grünecker, Kinkeldey, Stockmair & Schwanhäusser Anwaltssozietät

(57) **Abstract**

A gas sensor according to the present invention is a resistance-type gas sensor including: an oxide semiconductor layer (11) composed of an oxide containing cerium (11a,11b); and detection electrodes (12) for detecting the resistivity of the oxide semiconductor layer. The oxide semiconductor layer includes an alumina-containing layer (11a) in which alumina is contained, and the detection electrodes (12) are disposed in contact with the alumina-containing layer (11a).

## Description

### BACKGROUND OF THE INVENTION

### 1. Field of the Invention:

The present invention relates to a gas sensor, and in particular to a resistance-type gas sensor having an oxide semiconductor layer. Moreover, the present invention also relates to an internal combustion engine and a transportation apparatus incorporating such a gas sensor.

### 2. Description of the Related Art:

From the standpoint of environmental issues and energy issues, it has been desired to improve the mileage of internal combustion engines, and reduce the emission amount of regulated substances (e.g., NOₓ) that are contained within exhaust gas from internal combustion engines. In order to meet these needs, it is necessary to appropriately control the ratio between fuel and air in accordance with the state of combustion, so that fuel combustion will occur always under optimum conditions. The ratio of air to fuel is called an "air-fuel ratio" (A/F). In the case where a ternary catalyst is employed, the optimum air-fuel ratio would be the stoichiometric air-fuel ratio. The "stoichiometric air-fuel ratio" is an air-fuel ratio at which air and fuel will combust just sufficiently.

When fuel is combusting at the stoichiometric air-fuel ratio, a certain amount of oxygen is contained within the exhaust gas. When the air-fuel ratio is smaller than the stoichiometric air-fuel ratio (i.e., the fuel concentration is high), the oxygen amount in the exhaust gas decreases relative to that under the stoichiometric air-fuel ratio. On the other hand, when the air-fuel ratio is greater than the stoichiometric air-fuel ratio (i.e., the fuel concentration is low), the oxygen amount in the exhaust gas increases. Therefore, by measuring the oxygen amount or oxygen concentration in the exhaust gas, it is possible to estimate how much deviation the air-fuel ratio has relative to the stoichiometric air-fuel ratio. This makes it possible to adjust the air-fuel ratio and control the fuel combustion so as to occur under the optimum conditions.

As oxygen sensors for measuring the oxygen concentration in exhaust gas, oxygen sensors comprising a solid electrolyte as disclosed in Japanese Laid-Open Patent Publication No. 8-114571 and resistance-type oxygen sensors as disclosed in Japanese Laid-Open Patent Publication No. 5-18921 are known.

An oxygen sensor comprising a solid electrolyte measures oxygen concentration by measuring a difference in oxygen partial pressure between a reference electrode and a measuring electrode as an electromotive force. Therefore, in this type of oxygen sensor, it is necessary to expose the measuring electrode and the reference electrode to exhaust gas and air, respectively. This complicates the structure of the oxygen sensor itself, and also complicates any structure which may be employed for attaching the oxygen sensor to an exhaust pipe. The complicated structure also makes it difficult to downsize the oxygen sensor.

On the other hand, a resistance-type oxygen sensor detects changes in the resistivity of an oxide semiconductor layer which is provided so as to be in contact with exhaust gas. When the oxygen partial pressure within the exhaust gas changes, the oxygen vacancy concentration in the oxide semiconductor layer fluctuates, thus causing a change in the resistivity of the oxide semiconductor layer. Therefore, by detecting such a change in resistivity, the oxygen concentration can be measured. Since a resistance-type oxygen sensor does not require a reference electrode, the structure of the oxygen sensor itself can be simplified. Moreover, the structure which may be employed for attaching the oxygen sensor to an exhaust pipe can also be simplified.

As the oxide semiconductor to be employed for a resistance-type oxygen sensor, cerium oxide is considered as promising in terms of durability and stability. As disclosed in Japanese Laid-Open Patent Publication No. 2003-149189, by ensuring that the cerium oxide microparticles contained in the oxide semiconductor layer have an average grain size of 200 nm or less, the response of the resistance-type oxygen sensor employing cerium oxide can be improved.

As is disclosed in Japanese Laid-open Patent Publication No. 2004-93547, zirconium may be added to an oxide that contains cerium, whereby the rate of electron conduction of the oxide semiconductor layer is improved. This increases the oxygen partial pressure dependence of the output of the oxygen sensor, thus leading to an improved detection accuracy.

However, due to the increased concerns on environmental issues in the recent years, there has been a desire to detect oxygen concentration with an even higher accuracy.

### SUMMARY OF THE INVENTION

The present invention has been made in view of the above problems, and an objective thereof is to improve the detection accuracy of a resistance-type gas sensor comprising an oxide semiconductor layer which is composed of an oxide containing cerium.

A gas sensor according to the present invention is a gas sensor of a resistance-type, comprising: an oxide semiconductor layer composed of an oxide containing cerium; and detection electrodes for detecting a resistivity of the oxide semiconductor layer, wherein, the oxide semiconductor layer includes an alumina-containing layer in which alumina is contained; and the detection electrodes are disposed in contact with the alumina-containing layer. Thus, the aforementioned objective is met.

In a preferred embodiment, the alumina-containing layer contains alumina to an amount of no less than 4.5 wt% and no more than 12 wt%.

In a preferred embodiment, only a portion of the oxide semiconductor layer is the alumina-containing layer.

In a preferred embodiment, the entire oxide semiconductor layer is the alumina-containing layer.

In a preferred embodiment, the oxide semiconductor layer has a porous structure containing oxide semiconductor particles, the oxide semiconductor particles having an average grain size of 200 nm or less.

In a preferred embodiment, the alumina-containing layer has a porous structure containing oxide semiconductor particles and alumina particles, the alumina particles having an average grain size which is greater than an average grain size of the oxide semiconductor particles.

In a preferred embodiment, the oxide composing the oxide semiconductor layer further contains zirconium.

Alternatively, a gas sensor according to the present invention is a gas sensor of a resistance-type, comprising: an oxide semiconductor layer composed of an oxide containing cerium; and detection electrodes for detecting a resistivity of the oxide semiconductor layer, wherein, the oxide semiconductor layer contains alumina; and the alumina contained in the oxide semiconductor layer has a concentration distribution such that the alumina has a relatively high concentration near the detection electrode. Thus, the aforementioned objective is met.

In a preferred embodiment, the gas sensor according to the present invention is an oxygen sensor.

An internal combustion engine according to the present invention comprises a gas sensor having the above construction.

A transportation apparatus according to the present invention comprises an internal combustion engine having the above construction.

A gas sensor according to the present invention is a resistance-type gas sensor having an oxide semiconductor layer which is composed of an oxide containing cerium. In the gas sensor according to the present invention, the oxide semiconductor layer includes an alumina-containing layer in which alumina is contained, and detection electrodes are disposed in contact with the alumina-containing layer. As a result, the resistivity of the oxide semiconductor layer when in an atmosphere with a low oxygen partial pressure (i.e., fuel-rich side) is reduced, so that the sensor output has a greater oxygen partial pressure dependence. Thus, the detection accuracy is improved.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1** is an exploded perspective view schematically showing a gas sensor **10** according to a preferred embodiment of the present invention.

FIG. **2** is a cross-sectional view schematically showing a gas sensor **10** according to a preferred embodiment of the present invention.

FIG. **3** is a graph showing a relationship between lambda (λ) and sensor output (resistivity of an oxide semiconductor layer) when a varying amount of alumina is added, where the vertical axis is in logarithm.

FIG. **4** is a graph showing a relationship between resistivity and added amounts of alumina, on the rich side, of an oxide semiconductor layer.

FIG. **5** is a cross-sectional view schematically showing a gas sensor **10** according to a preferred embodiment of the present invention.

FIG. **6** is a graph showing a relationship between lambda (λ) and sensor output (resistivity of an oxide semiconductor layer), where the vertical axis is in logarithm, with respect to: the case where only a portion of the oxide semiconductor layer is an alumina-containing layer; and the case where the entire oxide semiconductor layer is an alumina-containing layer.

FIG. **7** is a graph showing the resistivity of an oxide semiconductor layer, with respect to: the case where silica/barium oxide (SiO₂·BaO) is added to 5 wt%; the case where silica/alumina (SiO₂·Al₂O₃) is added to 5 wt%; and the case where it is not added at all.

FIG. **8** is a graph showing the resistivity of an oxide semiconductor layer, with respect to: the case where silica/calcium oxide (SiO₂·CaO) is added to 5 wt%; and the case where it is not added at all.

FIGS. **9A** and **9B** are perspective views schematically showing a construction for affixing a gas sensor **10** to an exhaust pipe, where FIG. **9A** shows a protection cap being unattached, and FIG. **9B** shows a protection cap being attached.

FIG. **10** is a cross-sectional view schematically showing a construction for affixing a gas sensor **10** to an exhaust pipe.

FIG. **11** is a diagram schematically showing an exemplary motorcycle incorporating the gas sensor **10.**

FIG. **12** is a diagram schematically showing a control system of an engine in the motorcycle shown in FIG. **11.**

FIG. **13** is a flowchart showing an exemplary flow of control for the gas sensor **10.**

### DETAILED DESCRIPTION OF PREFERRED EMBODIMENTS

Hereinafter, a preferred embodiment of the present invention will be described with reference to the accompanying drawings. Note that the present invention is not to be limited to the following embodiment.

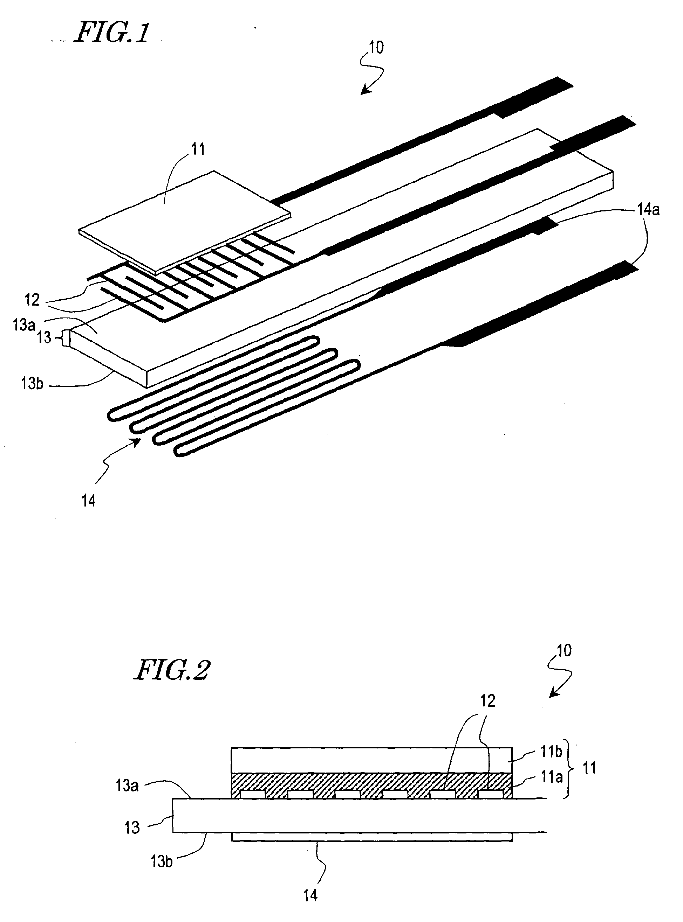

First, with reference to FIGS. **1** and **2,** the structure of a gas sensor **10** according to the present embodiment will be described. FIGS. **1** and **2** are an exploded perspective view and a cross-sectional view, respectively, schematically showing the gas sensor **10.** As shown in FIGS. **1** and **2,** the gas sensor **10** is a resistance-type oxygen sensor having an oxide semiconductor layer **11** which is composed of an oxide containing cerium and detection electrodes **12** for detecting the resistivity of the oxide semiconductor layer **11.**

The oxide semiconductor layer **11** and the detection electrodes **12** are supported by a substrate **13.** The substrate **13** is formed of an insulator such as alumina or magnesia. The substrate **13** has a principal face **13a** and a rear face **13b** opposing each other, such that the oxide semiconductor layer **11** and the detection electrodes **12** are disposed on the principal face **13a.**

The oxide semiconductor layer **11** has a porous structure, and releases or absorbs oxygen in accordance with the oxygen partial pressure in the atmosphere. This causes a change in the oxygen vacancy concentration in the oxide semiconductor layer **11,** which in turn causes a change in the resistivity of the oxide semiconductor layer **11.** By measuring this change in resistivity with the detection electrodes **12,** the oxygen concentration can be detected.

As an oxide composing the oxide semiconductor layer **11,** cerium oxide or a composite of cerium oxide and zirconium oxide can be used, for example. By using an oxide which contains zirconium in addition to cerium, an improved detection accuracy is obtained as described in Japanese Laid-open Patent Publication No. 2004-93547, supra. The typical oxide semiconductor layer **11** dominantly includes cerium oxide (i.e., no less than 50 mol% of cerium oxide).

The detection electrodes **12** is formed of an electrically conductive material, e.g., a metal material such as platinum, platinum-rhodium alloy, or gold. Preferably, the detection electrodes **12** are shaped in the form of combteeth in order to enable efficiently measurement of changes in the resistivity of the oxide semiconductor layer **11.**

On the rear face **13b** side of the substrate **13,** a heater **14** for elevating the temperature of the oxide semiconductor layer **11** is provided. In the present embodiment, the heater **14** is a heating device of a resistance heating type, which performs heating by utilizing resistance loss. When a voltage is applied to electrodes **14a** which extend from the heater **14,** an electric current flows in the heating element that is formed in a predetermined shape, whereby the heating element generates heat. The heat is conducted to the oxide semiconductor layer **11** via the substrate **13.** The heating element is often formed of a metal material. By elevating the temperature of the oxide semiconductor layer **11** with the heater **14** to enable quick activation, the detection accuracy at the start of the internal combustion engine can be improved.

As shown in FIG. **2**, the oxide semiconductor layer **11** of the gas sensor **10** of the present embodiment is composed by stacking: an alumina-containing layer **11a** to which alumina is added; and a non-alumina-containing layer **11b** to which no alumina is added. In other words, the oxide semiconductor layer **11** includes the alumina-containing layer **11a** in which alumina is contained. The detection electrodes **12** are in contact with the alumina-containing layer **11a.** Stated otherwise, along the thickness direction of the gas sensor **10** (i.e., a direction perpendicular to the principal face **13a** of the substrate **13),** there are the detection electrodes **12,** the alumina-containing layer **11a,** and the non-alumina-containing layer **11b,** which are stacked in this order. Thus, the alumina-containing layer **11a** is disposed on the side of the oxide semiconductor layer **11** facing the detection electrodes **12.**

The detection accuracy of the gas sensor **10** is improved when the oxide semiconductor layer **11** includes the alumina-containing layer **11a** as such. The reason thereof will be described below.

The inventor has conducted various studies for improving the detection accuracy of resistance-type gas sensors, and discovered a surprising phenomenon that adding alumina to an oxide containing cerium actually reduces the resistivity of the oxide semiconductor layer. Alumina is known to have a high electrical insulation ability, and conventionally, alumina has never been used for the purpose of reducing the electrical resistance of any material. Needless to say, no instances have been reported of an oxide semiconductor for a gas sensor where alumina is added for the purpose of reducing its resistivity.

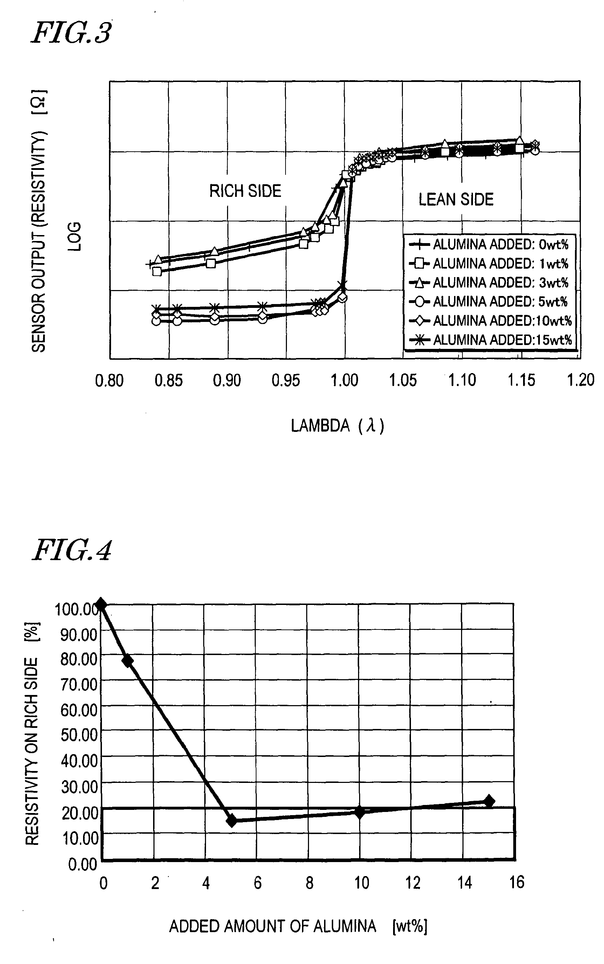

FIG. **3** shows results of prototyping the gas sensor **10** according to the present embodiment and measuring the resistivity (i.e., sensor output) of the oxide semiconductor layer **11** while varying the added amount of alumina (i.e., weight fraction of alumina in the alumina-containing layer **11a)** . In the graph of FIG. **3,** lambda (λ) is shown on the horizontal axis, whereas sensor output is shown in logarithm on the vertical axis. Lambda (λ) is a value indicating how deviated an actual air-fuel ratio is from a stoichiometric air-fuel ratio, as expressed by the formula: λ=(supplied air amount)/(theoretically required air amount). When λ =1 (i.e., center of the graph), the air-fuel ratio is equal to the stoichiometric air-fuel ratio. On the other hand, when λ<1 (i.e., left-hand side of the graph), the supplied air amount is insufficient, so that the mixture is dense ("rich" side). When λ>1 (i.e., right-hand side of the graph), the supplied air amount is excessive, so that the mixture is thin ("lean" side).

As can be seen from FIG. **3,** resistivity is greatly reduced on the rich side because of the addition of alumina. As a result, the sensor output has a large oxygen partial pressure dependence, whereby the detection accuracy is improved. Although the mechanism by which the addition of alumina reduces the resistivity of the oxide semiconductor layer **11** is not clear, it has been experimentally confirmed that the resistivity does lower on the rich side.

FIG. **4** shows a relationship between the resistivity of the oxide semiconductor layer **11** on the rich side and the added amount of alumina. In FIG. **4,** resistivity is shown by relative values, defining the resistivity when the added amount of alumina is 0 wt% to be 100%.

As shown in FIG. **4,** when the added amount of alumina is between 0 wt% and about 5 wt%, the resistivity greatly decreases as the amount of alumina increases. When the added amount of alumina exceeds about 5 wt%, the resistivity slightly increases as the amount of alumina increases. As can be seen from FIG. **4,** by ensuring that the alumina content in the alumina-containing layer **11a** is no less than 4.5 wt% and no more than 12 wt%, the resistivity of the oxide semiconductor layer 11 can be made sufficiently low, i.e., 20% or less.

The gas sensor **10** of the present embodiment can be produced as follows, for example.

First, the substrate **13** is provided. The substrate **13** has an insulative surface, and preferably has a heat resistance such that it experiences substantially no deformation or the like at the temperature of a heat treatment which is performed in the following process or at the temperature at which the gas sensor **10** is to be used. For the prototype gas sensor whose data is shown in FIGS. **3** and **4,** an alumina substrate having a thickness of 0.635 mm, a width of 5 mm, and a length of 15 mm was used.

Next, the detection electrodes **12** are formed on the principal face **13a** of the substrate **13.** The detection electrodes **12** are made of a material which is electrically conductive and which has a heat resistance similar to that of the substrate **13.** As a method for forming the electrodes **12,** a screen printing technique can be employed, for example. In the prototype, after a platinum paste was applied on the principal face **13a** by a screen printing technique, baking was performed, whereby the detection electrodes **12** were formed so as to have a thickness of 8 µm, a width of 100 µm and a distance of 100 µm in between adjacent combteeth of the electrodes.

Next, the oxide semiconductor layer **11** is formed so as to cover the detection electrodes **12.** Specifically, two kinds of slurries containing particles of oxide semiconductor are prepared first: one of the slurries includes alumina particles added thereto, whereas the other slurry includes no alumina particles added thereto.

Next, the slurry including alumina particles added thereto is applied on the principal face **13a** of the substrate **13** so as to cover the detection electrodes **12,** and thereafter subjected to baking, thereby forming the alumina-containing layer **11a** having a porous structure.

Then, the slurry including no alumina particles added thereto is applied on the alumina-containing layer **11a,** and thereafter subjected to baking, thereby forming the non-alumina-containing layer **11b** having a porous structure. Thus, the oxide semiconductor layer **11** is formed.

In the prototype, a slurry including particles (average grain size: 10 nm to 50 nm) of a composite oxide whose main component is cerium and which has 20 mol% zirconium added thereto (expressed by the chemical formula Ce_{0.8}Zr_{0.2}O_{2-δ}) was used to form the non-alumina-containing layer **11b** so as to have a thickness of 5 µm after baking. Moreover, a slurry obtained by further adding 5 mol% alumina (average grain size: 200 nm to 800 nm) to the aforementioned slurry for the non-alumina-containing layer **11b** was used to form the alumina-containing layer **11a** so as to have a thickness of 5µm after baking.

In addition to forming the detection electrodes **12** and the oxide semiconductor layer **11** on the principal face **13a** of the substrate **13** as described above, the heater **14** is formed on the rear face **13b** of the substrate **13.** As the material of the heater **14,** a metal material such as platinum or tungsten can also be used. Moreover, a nonmetal material can also be used, e.g., an oxide conductor such as rhenium oxide can be used. As a method for forming the heater **14,** a screen printing technique is suitably used.

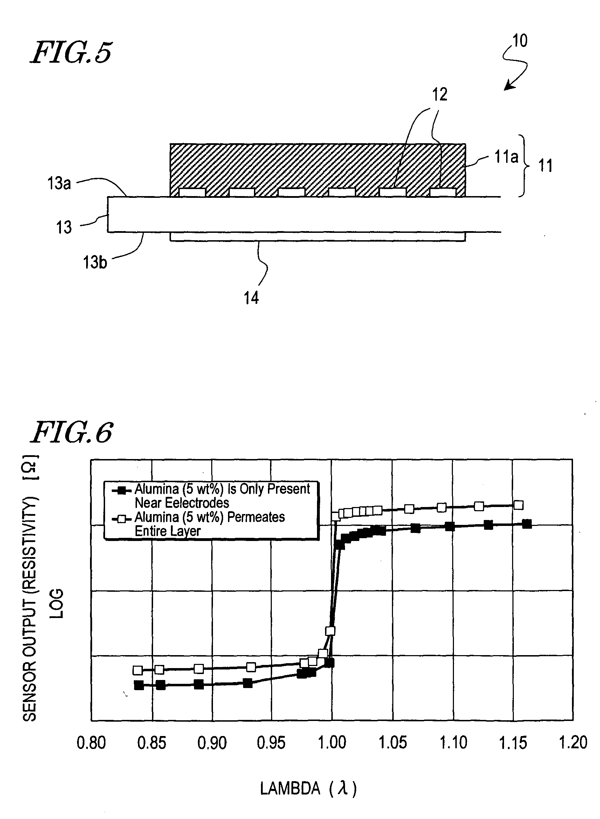

The gas sensor **10** can be produced in the above-described manner. Although the present embodiment illustrates a construction (as shown in FIG. **2)** in which only a portion of the oxide semiconductor layer **11** is the alumina-containing layer **11a,** it must be noted that the entire oxide semiconductor layer **11** may be the alumina-containing layer **11a** (as shown in FIG. **5**).

From the standpoint of lowering the resistance of the oxide semiconductor layer **11,** it is preferable that alumina is only present near the detection electrodes **12.** In other words, it is preferable that only a portion of the oxide semiconductor layer **11** is the alumina-containing layer **11a.** FIG. **6** shows the resistivity of the oxide semiconductor layer **11** (where the vertical axis is in logarithm) with respect to: the case where only a portion of the oxide semiconductor layer **11** is the alumina-containing layer **11a** (i.e., alumina is only present near the detection electrodes **12);** and the case where the entire oxide semiconductor layer **11** is the alumina-containing layer **11a** (i.e., alumina permeates the entire oxide semiconductor layer **11**).

As can be seen from FIG. **6,** the construction in which only a portion (i.e., a portion near the detection electrodes **12)** of the oxide semiconductor layer **11** is the alumina-containing layer **11a** provides a lower resistivity. This is presumably because, when the alumina particles permeate the entire oxide semiconductor layer **11,** the oxygen within exhaust gas is prevented from being taken into oxygen vacancies. As shown in FIG. **2,** by ensuring that only a portion of the oxide semiconductor layer **11** is the alumina-containing layer **11a** while any other portion that is in contact with the exhaust gas is the non-alumina-containing layer 11b, oxygen is advantageously taken into the oxygen vacancies, whereby the resistance of the oxide semiconductor layer **11** can be further lowered.

On the other hand, as shown in FIG. **5,** by ensuring that the entire oxide semiconductor layer **11** is the alumina-containing layer **11a,** production of the gas sensor **10** can be simplified and the costs thereof can be lowered because it is unnecessary to prepare two kinds of slurries and perform two application steps/two baking steps when forming the oxide semiconductor layer **11.**

Note that the above description is directed to an exemplary case where the alumina concentration within the oxide semiconductor layer **11** changes between two levels along the thickness direction of the gas sensor **10** (construction shown in FIG. **2)** or an exemplary case where it is substantially constant (construction shown in FIG. **5).** However, the alumina concentration within the oxide semiconductor layer **11** may change in three or more levels along the thickness direction of the gas sensor **10,** or may vary linearly (gradually). However, from the standpoint of lowering the resistance of the oxide semiconductor layer **11,** it is preferable to create a concentration distribution such that the alumina concentration is relatively low in a region of the oxide semiconductor layer **11** where it comes in contact with the exhaust gas (even if alumina is to be contained in the entire oxide semiconductor layer **11);** that is, the alumina contained in the oxide semiconductor layer **11** preferably has a relatively high concentration near the detection electrodes **12.** Stated otherwise, it is preferable that the alumina concentration in the oxide semiconductor layer **11** is higher near the detection electrodes **12** than near the surface of the gas sensor **10.**

As has already been described, the oxide semiconductor layer **11** has a porous structure including particles of an oxide semiconductor. The response of the gas sensor **10** can be improved by ensuring that the particles of an oxide semiconductor containing cerium have a small average grain size, specifically 200 nm or less, because this reduces the travel distance of oxygen vacancies within the particles and increases the surface area of the oxide semiconductor, whereby the response time of an output which is made in response to a change in oxygen concentration is reduced. Moreover, when the average grain size of oxide semiconductor particles is reduced, the oxide semiconductor particles will bind to one another at an increased number of sites, thus producing the effect of improving the mechanical strength of the porous structure.

Moreover, the average grain size of alumina particles is preferably larger than the average grain size of oxide semiconductor particles. When the average grain size of alumina particles is larger than the average grain size of oxide semiconductor particles, the relatively small oxide semiconductor particles will be positioned so as to surround the relatively large alumina particles, whereby the oxide semiconductor particles are prevented from taking an overly dense positioning. As a result, the porous structure has an increased porosity.

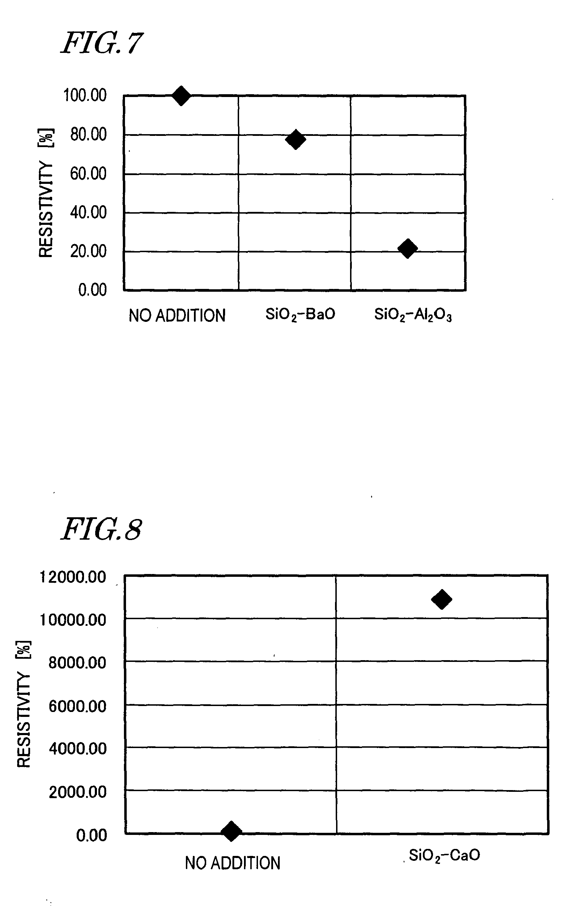

The above descriptions are directed to the case where alumina is added to the oxide semiconductor layer **11.** FIG. **7** shows resistivity (relative values) in the case where silica/barium oxide (SiO₂·BaO) is added to 5 wt%, instead of alumina. As can be seen from FIG. **7**, the resistivity is not much reduced by adding silica/barium oxide than when it is not added at all. This indicates that alumina is particularly suitable for reducing the resistivity of the oxide semiconductor layer **11.**

FIG. **7** also shows resistivity in the case where silica/alumina (SiO₂·Al₂O₃) is added to 5 wt%, instead of alumina. As can be seen from FIG. **7,** the resistivity is greatly reduced by adding silica/alumina than when it is not added at all. Thus, rather than being added alone, alumina may be added in the form of a composite such as silica/alumina to the oxide semiconductor layer **11.** In other words, it suffices if a whole or part of the oxide semiconductor layer **11** contains alumina as a component. Note that, in the example shown in FIG. **7,** alumina accounts for 1/4 of the entire silica/alumina that has been added, which means that this addition of silica/alumina is equivalent to alumina being added to an amount of 1.25 wt%.

For reference, FIG. **8** shows resistivity (relative values) in the case where silica/calcium oxide (SiO₂·CaO) is added to 5 wt%, instead of alumina. As can be seen from FIG. **8,** the resistivity is increased by 100 times or more by adding silica/calcium oxide than when it is not added at all. This also indicates that alumina is preferable for reducing the resistivity of the oxide semiconductor layer **11.**

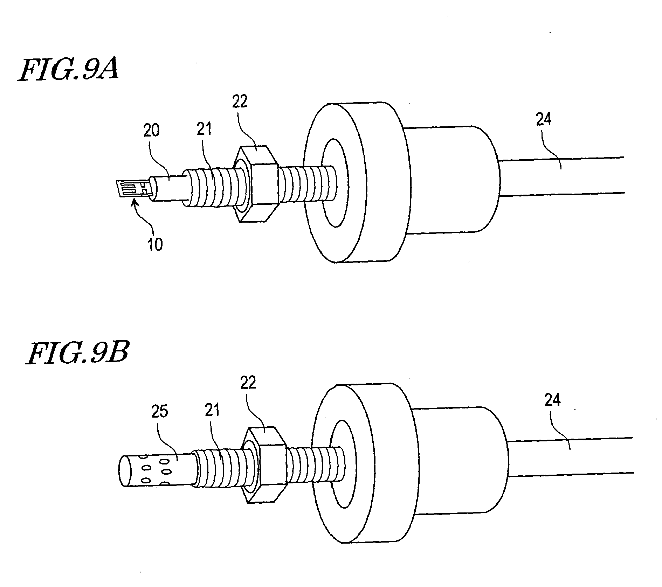

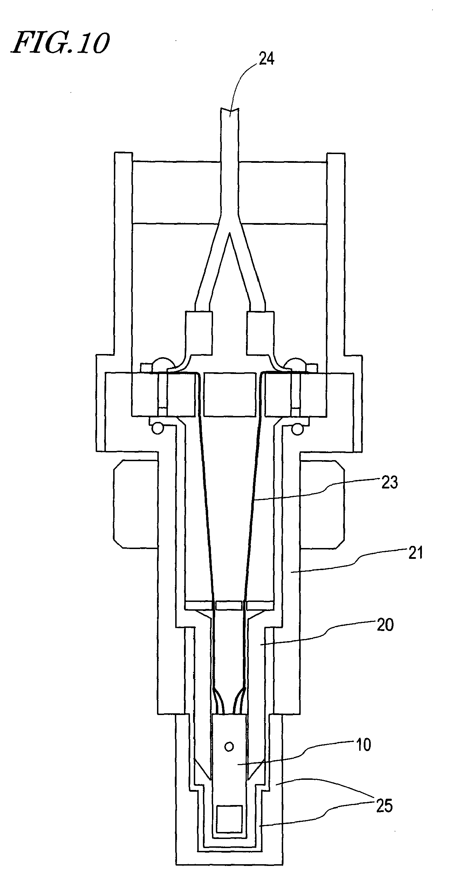

Next, with reference to FIGS. **9A** and **9B** and FIG. **10,** a construction for actually attaching the gas sensor **10** to an exhaust pipe of an internal combustion engine will be described.

At its base end, the gas sensor **10** is held by a first housing **20,** as shown in FIGS. **9A** and **10.** The first housing **20** is a ceramic guide which is made of a ceramic material, for example. Furthermore, the first housing **20** carrying the gas sensor **10** is held in place by a second housing **21.** The second housing **21** is a metal case which is made of stainless steel, for example. The surface of the second housing **21** is threaded, and the second housing **21** is affixed to an exhaust pipe with a nut **22** which engages with the threading.

In actual use, as shown in FIG. **9B,** a protection cap **25** is provided so as to cover the gas sensor **10.** The result of detection by the gas sensor **10** is output to a control device via a detection line **24.** The inside of the first housing **20** is sealed in an airtight manner by using a filler (e.g., talc powder) **23.**

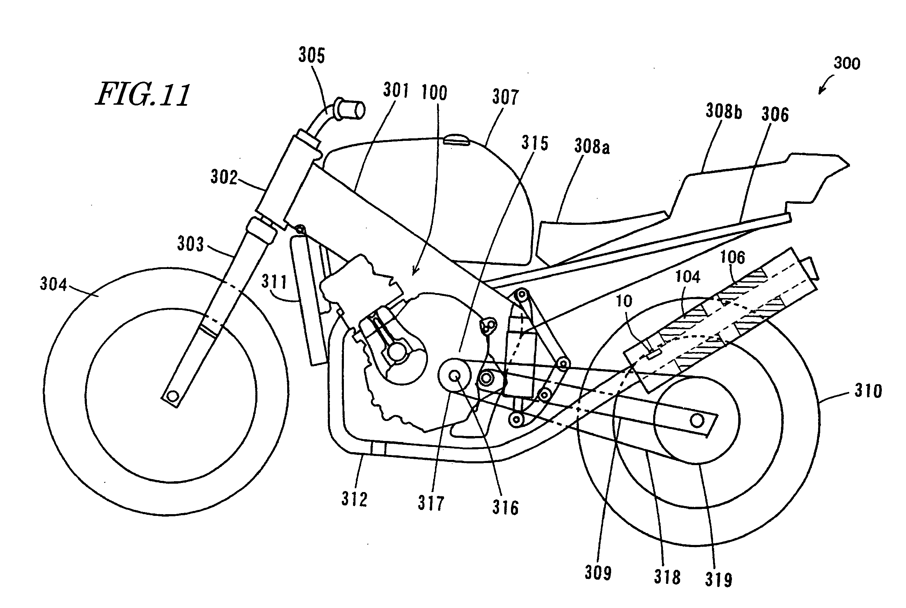

Next, a vehicle which incorporates the gas sensor **10** according to the present embodiment and which employs an internal combustion engine as a driving source will be described. FIG. **11** schematically shows a motorcycle **300** incorporating the gas sensor **10.**

As shown in FIG. **11,** the motorcycle **300** includes a body frame **301** and an engine (internal combustion engine) **100.** A head pipe **302** is provided at the front end of the body frame **301.** To the head pipe **302,** a front fork **303** is attached so as to be capable of swinging in the right-left direction. At the lower end of the front fork **303,** a front wheel **304** is supported so as to be capable of rotating. Handle bars **305** are attached to the upper end of the head pipe **302.**

A seat rail **306** is attached at an upper portion of the rear end of the body frame **301** so as to extend in the rear direction. A fuel tank **307** is provided above the body frame **301,** and a main seat **308a** and a tandem seat **308b** are provided on the seat rail **306.** Moreover, rear arms **309** extending in the rear direction are attached to the rear end of the body frame **301.** At the rear end of the rear arms **309,** a rear wheel **310** is supported so as to be capable of rotating.

The engine **100** is held at the central portion of the body frame **301.** A radiator **311** is provided in front of the engine **100.** An exhaust pipe **312** is connected to an exhaust port of the engine **100.** As will be specifically described below, a gas sensor **10,** a ternary-type catalyst **104,** and a muffler **106** are provided on the exhaust pipe (in an ascending order of distance from the engine **100).** The top end of the gas sensor **10** is exposed in a passage within the exhaust pipe **312** in which exhaust gas travels. Thus, the gas sensor **10** detects oxygen within the exhaust gas. The gas sensor **10** has the heater **14** as shown in FIG. **1,** etc., attached thereto. As the temperature of the oxide semiconductor layer **11** is elevated by the heater **14** at the start of the engine **100** (e.g., elevated to 700 °C in 5 seconds), the detection sensitivity of the oxide semiconductor layer **11** is enhanced.

A transmission **315** is linked to the engine **100.** Driving sprockets **317** are attached on an output axis **316** of the transmission **315.** Via a chain **318,** the driving sprockets **317** are linked to rear wheel sprockets **319** of the rear wheel **310.**

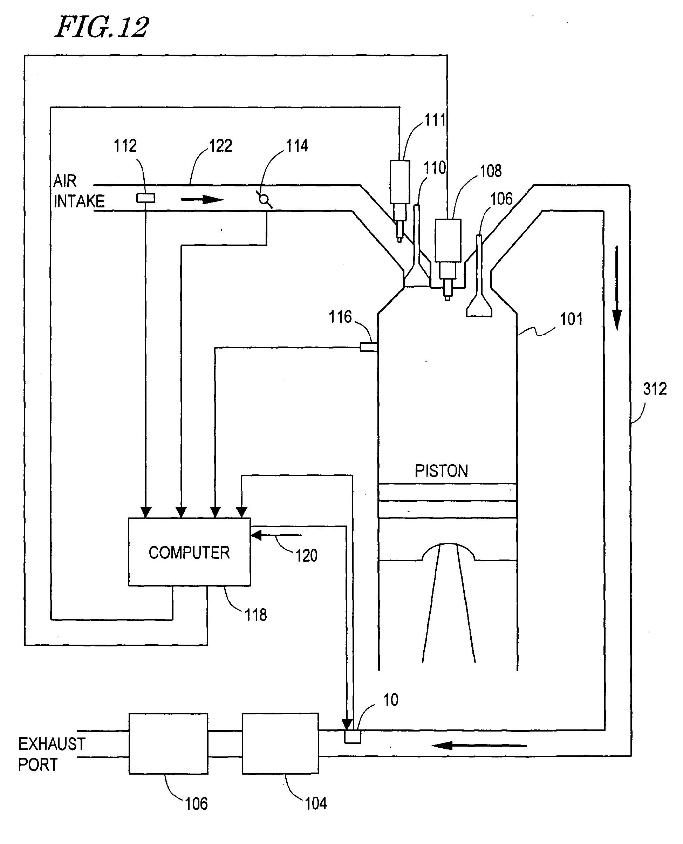

FIG. **12** shows main component elements of a control system of the engine **100.** On a cylinder **101** of the engine **100,** an intake valve **110,** an exhaust valve **106,** and a spark plug **108** are provided. There is also provided a water temperature sensor **116** for measuring the water temperature of the cooling water with which to cool the engine. The intake valve **110** is connected to an intake manifold **122,** which has an air intake. On the intake manifold **122,** an airflow meter **112,** a throttle sensor **114** for a throttle valve, and a fuel injector **111** are provided.

The airflow meter **112,** the throttle sensor **114,** the fuel injector **111,** the water temperature sensor **116,** the spark plug **108,** and the gas sensor **10** are connected to a computer **118,** which is the control section. A vehicle velocity signal **120,** which represents the velocity of the motorcycle **300,** is also input to the computer **118.**

When a rider starts the engine **100** by using a self-starting motor (not shown), the computer **118** calculates an optimum fuel amount based on detection signals and the vehicle velocity signal **120** obtained from the airflow meter **112,** the throttle sensor **114,** and the water temperature sensor **116,** and based on the result of calculation, outputs a control signal to the fuel injector **111.** The fuel which is injected from the fuel injector **111** is mixed with the air which is supplied from the intake manifold **122,** and injected into the cylinder **101** via the intake valve **110,** which is opened or closed with appropriate timing. The fuel which is injected in the cylinder **101** combusts to become exhaust gas, which is led to the exhaust pipe **312** via the exhaust valve **106.**

The gas sensor **10** detects the oxygen in the exhaust gas, and outputs a detection signal to the computer **118.** Based on the signal from the gas sensor **10,** the computer **118** determines the amount of deviation of the air-fuel ratio from an ideal air-fuel ratio. Then, the amount of fuel which is injected from the fuel injector **111** is controlled so as to attain the ideal air-fuel ratio relative to the air amount which is known from the signals obtained from the flowmeter **112** and the throttle sensor **114.** Thus, an air-fuel ratio controller which includes the gas sensor **10** and the computer (control section) **118** connected to the gas sensor **10** appropriately controls the air-fuel ratio of the internal combustion engine.

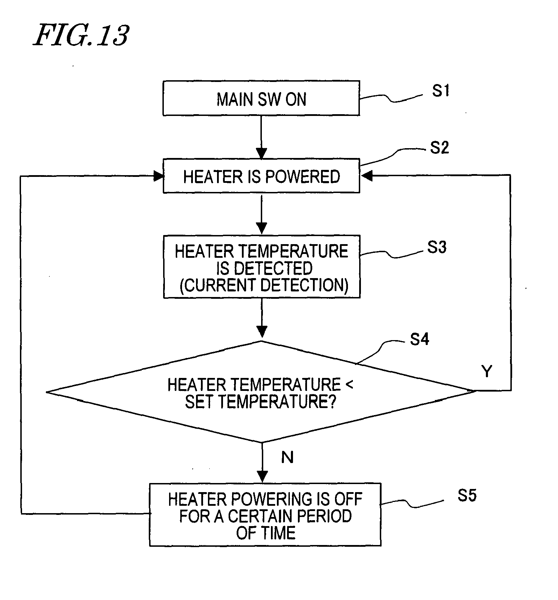

FIG. **13** shows a flow of control for the heater **14** of the gas sensor **10.** When the engine **100** is started and the main switch is placed in an ON state (step **S1**), the heater **14** begins to be powered (step **S2).** Next, the temperature of the heater **14** is detected (step **S3),** and it is determined whether the temperature of the heater **14** is lower than a set temperature or not (step **S4).** Detection of the temperature of the heater **14** can be performed by, utilizing the fact that the resistance value of the heater **14** changes depending on temperature, detecting the electric current which flows in the heater **14.** If the temperature of the heater **14** is lower than the set temperature, the heater **14** continues to be powered (step **S2**). On the other hand, if the temperature of the heater **14** is equal to or greater than the set temperature, powering of the heater **14** is stopped for a certain period of time (step **S5),** and after resuming powering of the heater **14** (step **S2)**, the temperature of the heater **14** is detected (step **S3).** Through such a flow of control, the temperature of the heater **14** is kept constant.

In the motorcycle **300** incorporating the gas sensor **10** of the present embodiment, after the start of the engine **100,** the oxygen concentration within the exhaust gas and changes therein can be detected with a good detection accuracy. This ensures that, even at the start, fuel and air are mixed at an appropriate air-fuel ratio, and allow the fuel to combust under optimum conditions, whereby the concentration of regulated substances (e.g., NOₓ) within the exhaust gas can be reduced. It is also possible to obtain improved mileage.

Although a motorcycle has been illustrated for instance, the present invention can also be suitably used for any other transportation apparatus, e.g., a four-wheeled automobile. Moreover, the internal combustion engine is not limited to a gasoline engine, but may alternatively be a diesel engine.

According to the present invention, the detection accuracy of a resistance-type gas sensor having an oxide semiconductor layer which is composed of an oxide containing cerium can be improved. The gas sensor according to the present invention has an excellent detection accuracy, and therefore is suitably used in an internal combustion engine for various transportation apparatuses, e.g., a car, a bus, a truck, a motorbike, a tractor, an airplane, a motorboat, a vehicle for civil engineering use, or the like.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A gas sensor of a resistance-type comprising:
an oxide semiconductor layer composed of an oxide containing cerium; and
detection electrodes for detecting a resistivity of the oxide semiconductor layer, wherein,
the oxide semiconductor layer includes an alumina-containing layer in which alumina is contained; and
the detection electrodes are disposed in contact with the alumina-containing layer.

2. The gas sensor of claim 1, wherein the alumina-containing layer contains alumina to an amount of no less than 4.5 wt% and no more than 12 wt%.

3. The gas sensor of claim 1 or 2, wherein only a portion of the oxide semiconductor layer is the alumina-containing layer.

4. The gas sensor of claim 1 or 2, wherein the entire oxide semiconductor layer is the alumina-containing layer.

5. The gas sensor of any of claims 1 to 4, wherein the oxide semiconductor layer has a porous structure containing oxide semiconductor particles, the oxide semiconductor particles having an average grain size of 200 nm or less.

6. The gas sensor of any of claims 1 to 5, wherein the alumina-containing layer has a porous structure containing oxide semiconductor particles and alumina particles, the alumina particles having an average grain size which is greater than an average grain size of the oxide semiconductor particles.

7. The gas sensor of any of claims 1 to 6, wherein the oxide composing the oxide semiconductor layer further contains zirconium.

8. A gas sensor of a resistance-type comprising:
an oxide semiconductor layer composed of an oxide containing cerium; and
detection electrodes for detecting a resistivity of the oxide semiconductor layer, wherein,
the oxide semiconductor layer contains alumina; and
the alumina contained in the oxide semiconductor layer has a concentration distribution such that the alumina has a relatively high concentration near the detection electrode.

9. The gas sensor of any of claims 1 to 8, wherein the gas sensor is an oxygen sensor.

10. An internal combustion engine comprising the gas sensor of claim 9.

11. A transportation apparatus comprising the internal combustion engine of claim 10.
